# EUROPÄISCHE PATENTSCHRIFT

(11) **EP 0 546 472 B1**
(45) Veröffentlichungstag und Bekanntmachung des Hinweises auf die Patenterteilung: **26.03.1997**
(21) Anmeldenummer: 92120721.3
(22) Anmeldetag: 04.12.1992
(51) Int. Cl.: G01N 21/64, C09K 11/06

(54) **Messeinrichtung zur Bestimmung der Konzentration von anorganischen und organischen Verbindungen in einer Probe**
Measuring device for determination of the concentration of anorganic and organic compounds in a sample
Dispositif de mesure pour déterminer la concentration des composés inorganiques et organiques d'un échantillon

(30) Priorität: 07.12.1991 DE 4140411
(43) Veröffentlichungstag der Anmeldung: 16.06.1993
(73) Patentinhaber: HOECHST AKTIENGESELLSCHAFT, 65926 Frankfurt am Main (DE)
(72) Erfinder: Zimmermann, Andreas, W-6000 Frankfurt/M (DE); Bargon, Joachim, Prof. Dr., W-5300 Bonn (DE); Stehlin, Thomas, Dr., W-6238 Hofheim/Ts. (DE); Prass, Werner, Dr., Tokyo (JP); Groh, Werner, Dr., W-6302 Lich (DE)

(56) Entgegenhaltungen:
- EP-A- 0 244 929
- EP-A- 0 247 261
- EP-A- 0 263 693
- EP-A- 0 352 610

## Beschreibung

Zur Bestimmung von organischen sowie anorganischen Spuren gibt es verschiedene Methoden. Seit langem bekannt sind beispielsweise die titrimetrischen Bestimmungen (z.B. Silbernitratbestimmung nach Fajans), photometrische Bestimmungen sowie beispielsweise potentiometrische Verfahren mit Hilfe von ionenselektiven Elektroden (beschrieben z.B. in: Cammann, Das Arbeiten mit ionenselektiven Elektroden, Springer-Verlag, 1977, Seite 72 ff.).

Die Chloridbestimmung erfolgt in der klinischen Analytik im wesentlichen mit Hilfe photometrischer und potentiometrischer Verfahren. Die titrimetrischen und photometrischen Bestimmungen sind sehr genau, aber eher arbeitsaufwendig und nicht zur kontinuierlichen Messung geeignet. Die Verfahren mit Hilfe ionenselektiver Membranen sind zur kontinuierlichen Messung geeignet, nachteilig sind ihre geringe Spezifität und ihre zum Teil geringe Langzeitstabilität. Außerdem wird bei jeder potentiometrischen Messung eine zweite Elektrode als Referenzelektrode benötigt.

Eine gute Konzentrationsbestimmung von Halogeniden und Säurehalogeniden ist beispielsweise mit Hilfe einer Meßeinrichtung möglich, die aus einem mit der Probe in Kontakt zu bringenden Sensorelement besteht, welches einen fluoreszenzoptischen Indikator enthält, der nach der Bestrahlung mit einer Anregungslichtquelle in Abhängigkeit von der vorliegenden Halogenidkonzentration fluoresziert (AT-B-384 891). Der Indikator, welcher in kationischer Form vorliegt, stammt dabei aus der Gruppe der (hetero)aromatischen, polycyclischen Verbindungen sowie Polyenfarbstoffe und ist in dünner Schicht kovalent über sogenannte Spacergruppen, welche zwischen der Oberfläche des Träger und den Indikatormolekülen angeordnet sind, an die Oberfläche eines festen Trägers gebunden. Das Trägermaterial stammt aus der Gruppe der organischen Polymere, wie Poly(meth)acrylate, Poly(meth)acrylamide, Polyacrylnitrile, Polystyrol oder Cellulose. Als Spacergruppen werden hier solche Molekülgruppierungen verwendet, welche den Abstand zwischen dem festen Träger und dem Indikatormolekül um mindestens die Länge einer CH₂-Einheit oder eines Phenylkernes erweitern.

Die Spacergruppen dienen im wesentlichen dazu eine Wechselwirkung zwischen der Farbstoffkomponente und dem Trägermaterial, welche zu einer eingeschränkten Beweglichkeit und somit zu einer verminderten Sensitivität der Farbstoffkomponente führt, zu vermeiden.

Der immobilisierte Farbstoff kann hierbei nur in kationischer Form ausreichend gelöscht werden, da die Hydrophilie des Trägers nicht ausreicht, um die Chloridionen in das Trägermaterial eindringen zu lassen, so daß eine Fluoreszenzlöschung des Farbstoffs nur an der Trägeroberfläche erfolgt. Da der Farbstoff nur in geringen Mengen vorliegt, wird die Hydrophilie des Trägers über elektrostatische Wechselwirkungen der Farbstoffkationen nur in sehr geringem Maße beeinflußt.

Der Nachteil der im Stand der Technik beschriebenen Verfahren ist, daß sie teilweise sehr arbeitsaufwendig und nicht zur kontinuierlichen Messung geeignet sind. Ferner weisen sie eine geringe Spezifität und Sensitivität sowie zum Teil eine geringe Langzeitstabilität auf.

Der Erfindung stellt sich daher im wesentlichen die Aufgabe, die genannten Nachteile der bekannten Verfahren bzw. Einrichtungen zur Durchführung dieser Verfahren zu vermeiden und insbesondere eine Meßeinrichtung zur Verfügung zu stellen, welche sich durch eine hohe Empfindlichkeit und Genauigkeit auszeichnet, ein kontinuierliches Meßverfahren erlaubt und deren Geometrie auf die verschiedenen Anwendungsbereiche abgestimmt werden kann.

Die vorliegende Erfindung löst diese Aufgabe und betrifft eine Meßeinrichtung zur Bestimmung von Konzentrationen anorganischer und organischer Verbindungen in einer Probe, mit einem mit der Probe in Kontakt zu bringenden Sensor, der einen fluoreszenzoptischen Indikator enthält, der nach Anregung über eine Anregungslichtquelle in Abhängigkeit von der vorliegenden Konzentration der zu detektierenden anorganischen oder organischen Verbindung fluoresziert. Ferner besitzt die Meßeinrichtung eine Anordnung zur Messung und Auswertung der eingestrahlten Strahlung und des reemmitierten Fluoreszenzlichtes.

Die Meßeinrichtung beeinhaltet ein mit der Probe in Kontakt zu bringendes Sensorelement, das aus einer Polymermatrix besteht, die aus
a) einer Matrixkomponente, welche sich von einer oder mehrerer Einheiten der Formel I ableitet 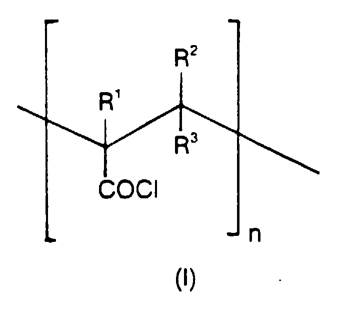 wobei
   - R¹-: Wasserstoff, Deuterium oder Methyl bedeutet;
   - R²- und R³-: unabhängig voneinander für Wasserstoff, Deuterium oder Methyl stehen und der Polymerisationsgrad,
   - n: eine ganze Zahl im Bereich von 80 bis 2500, vorzugsweise von 200 bis 2000 ist;
b) einer Farbstoffkomponente, die kovalent an den Säurechloridgruppen der Matrixkomponente immobilisiert ist und
c) einer oder mehrerer Quellkomponenten, die kovalent an den verbleibenden freien Säurechloridgruppen der Matrixkomponente gebunden sind,
hergestellt wird.

Als Matrixverbindung eignen sich Verbindungen der Formel I, oder Copolymere dieser Verbindungen, vorzugsweise solche, in denen R¹-, R²- und/oder R³-Wasserstoff oder Methyl sind, insbesondere Verbindungen in denen R¹-, R²-und/oder R³-Wasserstoff oder Deuterium bedeuten. Die Matrixkomponente wird durch radikalische Polymerisation eines oder mehrer Säurechloride der Formel II mittels eines Radikalstarters hergestellt.

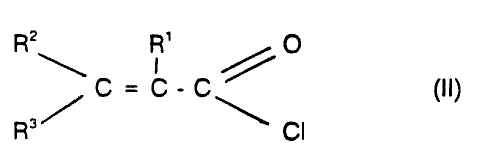

Als Radikalstarter eignen sich beispielsweise Azo-bis-iso-butyronitril (AIBN), tert.-Butylperoxid, m-Chlor-perbenzoesäure und Dicumylperoxid, vorzugsweise AIBN. An der linearen Grundkette der Matrixkomponente werden in einem darauffolgenden Schritt funktionelle Einheiten, hier die Farbstoffkomponente, beispielsweise 4- oder 5-Aminofluorescein, kovalent immobilisiert.

Der Farbstoff wird in einem starken Unterschuß, vorzugsweise in weniger als 2 mol-%, insbesondere im Bereich von 0,01 bis 1 mol-%, bezogen auf die Matrixkomponente (a), eingesetzt. Als Farbstoffkomponenten eignen sich beispielsweise Fluorescein- oder Cyaninfarbstoffe, aber auch die bekannten pH-Indikatoren und Chemolumineszenzfarbstoffe, insbesondere Farbstoffe die Hydroxy- oder Aminogruppen enthalten.

Als Beispiele seien hier Fluoresceinamin, Rhodamine, Coumarine, die Phthalo- und Carbocyanine sowie weitere Vertreter der Cyaninfarbstoffe genannt.

Als Quellkomponente eignen sich allgemein alle Alkohole, insbesondere geradkettige oder verzweigte C₁-C₆-Alkohole, sowie Glykole, beispielsweise C₁-C₄-Monoalkyletherglykol, vorzugsweise werden Methanol, Ethanol, Propanol oder Butanol sowie Ethylenglykolmonomethylether und Di- und Triethylenglykolmonoethylether verwendet. Mit Hilfe der Quellkomponente, die im Überschuß eingesetzt wird, vorzugsweise im 2- bis 6-fachen Überschuß, bezogen auf die Matrixkomponente (a), werden die restlichen freien Säurechloridgruppen der Matrixkomponente (ca. 99 %) an welchen sich noch kein Farbstoffmolekül befindet, verestert. Die Quellkomponente hat die Aufgabe, die Quellbarkeit des Gesamtsystems dominierend zu beeinflussen. Über eine Variation des Alkylrestes (Methyl, Ethyl über Propyl bis Butyl) wird die Quellbarkeit der Matrix und damit die Ansprechzeit (Zeitkonstante) des Sensors beeinflußt. So kann die Permeabilität der Polymermatrix durch Variation der Quellkomponente gezielt auf die Hydrophilie des Farbstoffs und der zu detektierenden Substanz eingestellt werden. Bei Verwendung von Glykolen ist es sogar möglich, eine hygroskopische Polymermatrix zu erzeugen.

Eine gute Quellbarkeit der Matrixkomponente läßt sich beispielsweise mit Methanol erzielen. Die Wahl der Quellkomponente ist hierbei abhängig von der Natur der Farbstoffkomponente, jedoch unabhängig von deren Konzentration. Bei hydrophilen Farbstoffen werden in der Regel höhere Alkohole als Quellkomponente eingesetzt, während man mit zunehmender Hydrophobie der Farbstoffkomponente kurzkettigere Alkohole und Glykole bevorzugt. Eine zunehmende Quellbarkeit der Matrixkomponente führt hierbei zu kürzeren Zeitkonstanten für die Ansprechzeit des Sensors, wobei die Ansprechzeiten im Bereich von 0,3 Sekunden bis 25 Minuten, insbesondere im Bereich von 1 Sekunde bis 20 Minuten liegen. Auf diese Weise ist es möglich, daß die zu detektierende Substanz, die eine Fluoreszenzlöschung des Farbstoffs hervorruft, in die Polymermatrix eindringt, so daß diese über den gesamten Volumenbereich als sensitives Element genutzt wird.

In einer weiteren Ausführungsform ist es möglich, verschiedene Quellkomponenten nacheinander in unterschiedlichen Konzentrationen an dem Matrixpolymer zu binden.

Ferner betrifft die Erfindung ein Verfahren zur Detektion organischer und anorganischer Spuren mit Hilfe der erfindungsgemäßen Meßeinrichtungen.

Die Detektion kann allgemein auf 3 verschiedenen Wegen erfolgen:
a) durch Fluoreszenzlöschung
   In Gegenwart von organischen oder anorganischen Verbindungen wird hierbei die Fluoreszenzintensität der Farbstoffmoleküle vermindert. Diese sogenannte Fluoreszenzlöschung ist reversibel, d.h. die Fluoreszenzintensität wird erst wieder maximal, wenn alle "Löschmoleküle" aus der Lösung entfernt worden sind;
b) durch eine spektrale Änderung des Fluoreszenzlichtes, d.h., daß die Lage des Maximums des Fluoreszenzlichts in Gegenwart von anorganischen oder organischen Verbindungen verschoben wird
   oder aber
c) das Sensorelement enthält eine Vorstufe eines Fluoreszenzfarbstoffes (z.B. Morin), welcher mit der zu detektierenden Verbindung (z.B. Al³⁺) einen fluoreszierer den Komplex bildet, der dann detektiert wird.

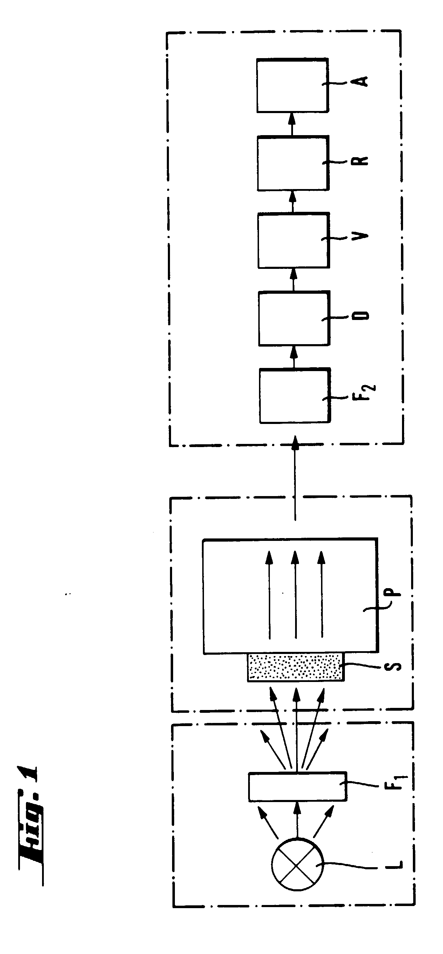

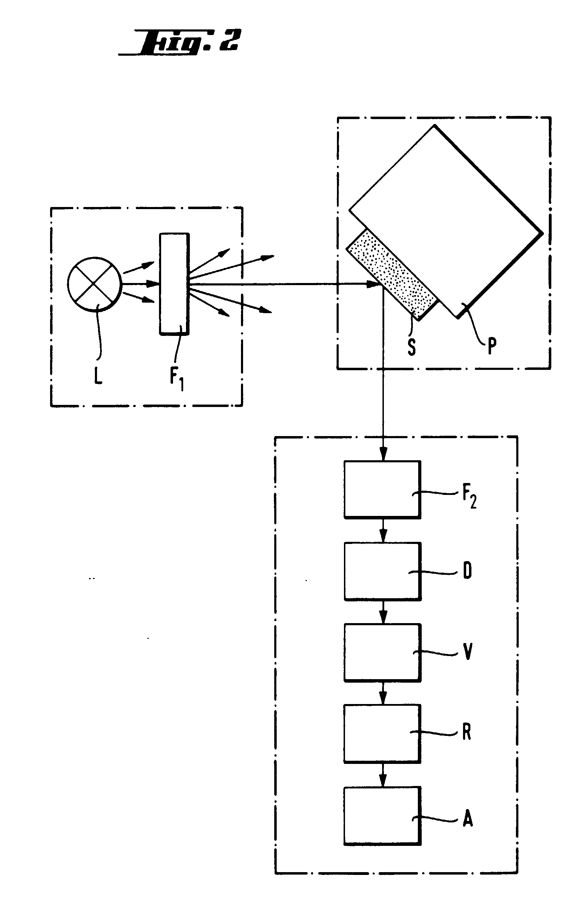

Figur 1 zeigt schematisch eine mögliche einfache Meßeinrichtung gemäß der Erfindung. Aus einer Lichtquelle (L) fällt Anregungslicht nach dem Passieren eines Primärfilters (F₁), auf das Sensorelement (S) und passiert danach den Probenraum (P). Das entstehende Fluoreszenzlicht fällt nach Passieren des Sekundärfilters (F₂), welcher die Aufgabe hat, das Anregungslicht herauszufiltern auf einen Lichtdetektor (D). Das hier erhaltene elektrische Signal wird in einem Verstärker (V) verstärkt, gegebenenfalls einer Recheneinheit (R) zugeführt und dann einer analogen oder digitalen Auswertung (A) zugeführt.
Es ist ferner möglich das Fluoreszenzlicht nicht nach Passieren eines Probenraumes, sondern in Remission zu messen (Figur 2).

Die Probenräume können z.B. als Einmalmeßkammern oder als Durchflußzellen ausgeführt sein. Als Lichtquellen können z.B. Glühlampen, Laser oder LED-artige Anordnungen dienen, die kontinuierlich oder gepulst Licht liefern. Als Filter können Absorptionsfilter oder Interferenzfilter eingesetzt werden. Als Lichtmeßeinrichtungen können lichtelektrische Photozellen, Elektronenvervielfacher oder Photodioden eingesetzt werden. In der Rechnereinheit wird die Konzentration des zu bestimmenden Stoffes bestimmt, wobei es in der Praxis oft notwendig werden kann, das ankommende Meßsignal bzw. die gemessene Fluoreszenzintensität um einen Untergrundanteil zu verringern oder eine Normierung durchzuführen, um auf das eigentliche Meßsignal zu kommen.

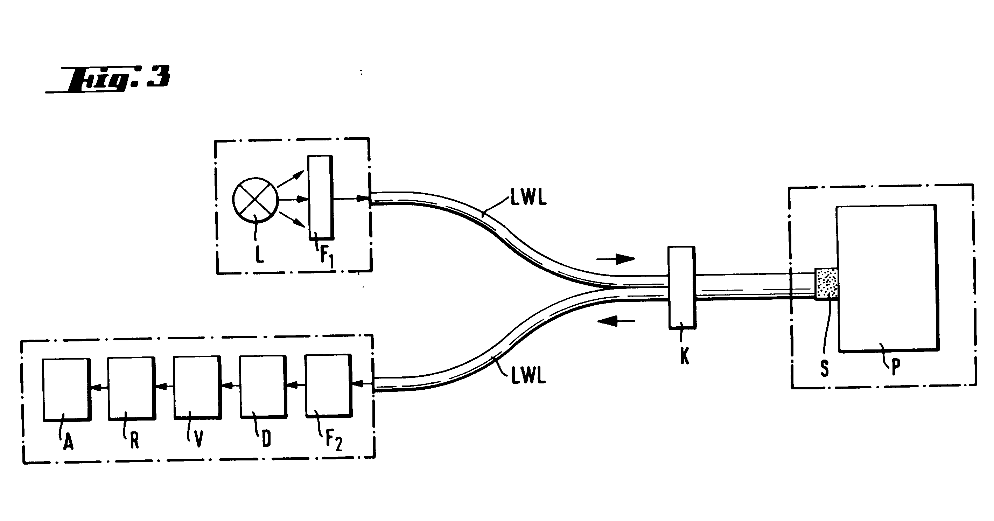

Im Bedarfsfall kann es je nach Maßgabe der Erfordernisse zu verschiedenartigen Anordnungen und zur Verwendung anderer Bauteile kommen. So kann es z.B. notwendig werden, die Lichtzufuhr von der Lichtquelle zu dem Sensorelement sowie die Lichtableitung von dem Sensorelement zu den Detektoren mit Hilfe von Lichtwellenleitern (LWL) vorzunehmen (siehe Figur 3). Gegebenenfalls kann bei dieser Anordnung ein Kopplerelement (K) zwischengeschaltet sein.

Weiterhin ist es möglich, dem Sensorelement semipermeable Membranen vorzuschalten, um die Diffusion der Löscher an die Indikatorschichten selektiver zu gestalten. Zur Trennung des Fluoreszenzsignals des Sensors von einer möglichen Störfluoreszenz des Probenmaterials kann es notwendig werden, optisch undurchlässige Trennschichten zwischen Probe und Sensor einzubauen, welche natürlich löscherdurchlässig sein müssen.

Mit Hilfe des erfindungsgemäßen Meßeinrichtung lassen sich beispielsweise im Bereich der Umwelttechnik anorganische Verunreinigungen, wie z.B. Nitrate, Nitrite, Halogenide, insbesondere Chloride, Bromide und Iodide, Metall- und Schwermetallionen, beispielsweise von Blei, Cobalt, Kupfer, Arsen, Antimon, Cadmium, Chrom, Quecksilber, Molybdän, Tallium, Nickel und Selen, aber auch organische Verunreinigungen wie z. B. Amino- und Nitroverbindungen, organische Halogenide, z. B. Brommethan, Chlordibrommethan, Ethylendibromid, Hexachlorobutadien, Bromoform und Glykole nachweisen.

In einer weiteren Ausführungsform läßt sich die erfindungsgemäße Meßeinrichtung zur pH-Wert-Bestimmung einsetzen.

Ferner ist sie insbesondere im Bereich der Medizintechnik zur Konzentrationsbestimmung von therapeutisch bedeutsamen Pharmaka (Drug Monitoring) geeignet. Beispiele hierfür sind Phenytoin, Phenobarbital, Primidon, Carbamazepin, Ethosuximid, Valproinsäure, Lidocain, Phenytoin, Procainamid, N-azetylprocainamid, Chinidin, Disopyramid, Theophyllin, Coffein, Amicacin, Gentamicin, Netilmicin, Tobramycin, Metotrexat, Chloramphenicol und Ciclosporin, besonders Theophyllin, Phenytoin, Phenobarbital, Lidocain, Phenytoin, Amicacin, Gentamicin, Metotrexat und Ciclosporin.

So müssen beispielsweise einige Pharmaka, die eine sehr geringe therapeutische Breite besitzen, wie einige Antiepileptika, Xanthine, Herzglykoside, Antiarhytmika und Aminoglykoside sehr genau dosiert werden. Hierzu werden üblicherweise Blutbild, Blutspiegel, Urinspiegel und Leberfunktion des Patienten genau überwacht. Sensoren die im Bereich des Drugmonitoring eingesetzt werden können, müssen eine hohe Genauigkeit und eine schnelle Ansprechzeit aufweisen.

Die Empfindlichkeit des Sensorelements der erfindungsgemäßen Meßeinrichtung liegt bei bis zu 0,5 ng/ml, insbesondere bei 5 ng/ml bei Ansprechzeiten von 1 Sekunde bis 20 Minuten, je nach Natur des eingesetzten Farbstoffs und der verwendeten Quellkomponente sowie der zu detektierenden Substanz.

### Beispiele

### 1) Herstellung von Polyacrylsäurechlorid

Bei der Herstellung des Polyacrylsäurechlorids wurde im Gegensatz zu anderen in der Literatur beschriebenen Verfahren an Stelle von Dioxan Chlorbenzol verwendet, und anstatt einer Fällung des Polymers in n-Heptan wurde nicht umgesetztes Monomer im Rotationsverdampfer entfernt. Durch diese Maßnahmen konnte der Kontakt mit Luftfeuchtigkeit vermieden werden, der Umsatz von 10 % auf 77 % und der Polymerisationsgrad von anfangs 133 auf 1733 gesteigert werden.

### Ansatz:

| | |
|---|---|
| 200 g | Acrylsäurechlorid = 2,2 mol (zuvor bei 92-96 °C destilliert (Fluka)) |
| 200 g | Chlorbenzol = 50 %ige Lsg. |
| 723,4 mg | AIBN (umkristallisiert) = 0,2 mol-% |

In einem 1l 3-Halskolben mit Ölbad, Thermometer, N₂-Einleitung, Rückflußkühler und Trockenrohr wird das Säurechlorid mit Chlorbenzol und AIBN vermischt und bei Raumtemperatur eine Stunde mit Stickstoff gespült. Sowohl die Ausgangsverbindungen, als auch der Stickstoff wurden vor Gebrauch getrocknet. Anschließend wird 7 Stunden lang bei 70 °C polymerisiert, danach die Lösung mit 200 ml Dioxan verdünnt und über Nacht im Kühlschrank bei 4°C aufbewahrt.

### Aufarbeitung:

Unverbrauchtes Säurechlorid wird im Rotationsverdampfer bei 70 °C bei vermindertem Druck (20-400 mbar) abgetrennt, bis das Destillat nicht mehr nach Säurechlorid riecht. Sobald das Polymer ausfällt, werden 250 ml Dioxan nachgefüllt. Anschließend wird die Polymerlösung gut verschlossen im Kühlschrank aufbewahrt.

### Konzentrationsbestimmung:

8,808 g der Polymerlösung werden abgetrennt und mit 40 ml Methanol unter Rückfluß verestert. Das Methanol wird von dem entstehenden Polymethylacrylat (PMA) abgetrennt und das PMA im Vakuum getrocknet und gewogen.
Ausbeute: 1,6316 g Polymer (PMA)
Freies Säurechlorid: 125,5 g = 17,5 %
Ausbeute der Polymerisation: 62,8 %

### Molekulargewichtsbestimmung:

Beschreibung der Walter-GPC-Anlage:
- Säulen: Ultrastyrogelsäulen
   3 Stück: 500 Å, 10³ Å, 10⁴ Å,
- Rl-Detektor Walter 410
- Pumpe: Walter Model 510 HPLC-Pumpe
- Lösungsmittel: Tetrahydrofuran (Riedel p.a.)
- Software: Walters Maxima 820
- Standard: PMMA von PSS Polymer Standards Service,
   (Molmassen: 1080000, 710000, 530000, 280000, 152000, 96000, 52200, 24400, 13100, 6400, 2030, 1210)

- Gewichtsmittel:: 158278 g/mol
- Polydispersivität:: 1,64

### 2) Immobilisierung von Fluoresceinamin:

Je 90 g der Polymerlösung werden hierzu mit 400 ml Dioxan (Riedel getrocknet) verdünnt und mit einer Fluoresceinaminlösung (Fluka) in Dioxan versetzt und unter Rühren aufbewahrt. In den folgenden Ansätzen A-E werden unterschiedliche Fluoreszeinamin-Konzentrationen bei sonst gleichen Herstellungsbedindungen umgesetzt.

| Ansatz [mol-%] | Säurechlorid | | Fluoresceinaminlösung in Dioxan | | |
|---|---|---|---|---|---|
| | [g] | [mol] | [mg] | [mmol] | [ml] |
| A 0,010 mmol | 90,26 | 0,24 | 9,33 | 0,027 | 20 |
| B 0,041 mmol | 90,05 | 0,24 | 41,3 | 0,119 | 20 |
| C 0,082 mmol | 90,10 | 0,24 | 82,5 | 0,238 | 40 |
| D 0,171 mmol | 89,95 | 0,24 | 175,0 | 0,504 | 60 |
| E 0,818 mmol | 90,33 | 0,24 | 838,7 | 2,415 | 100 |

Fluoresceinamin wird im starken Unterschuß eingesetzt und eine Woche bei Raumtemperatur unter Rühren vollständig (Dünnschichtchromatrographie (DC)-Kontrolle) acyliert.

### 3) Veresterung der überschüssigen Säurechloridgruppen:

Da durch die geringe Konzentration des Fluoreszeinamins nur relativ wenige Säurechloridgruppen aminiert werden (Ansatz A: 1,0∗10⁻² mol-%, Ansatz E: 0,8 mol-%), werden die übrigen noch freien Säurechloridgruppen in getrennten Versuchen mit 3 verschiedenen Alkoholen verestert. Hierzu wird die jeweilige Lösung (Ansatz A-E) in 3 gleiche Teile aufgeteilt und jede Teillösung mit Methanol, Ethanol oder Butanol verestert. Der Alkohol wird im 5fachen Überschuß eingesetzt und 7 Stunden zusammen mit der Polymerlösung unter Rückfluß auf 60 bis 80°C erhitzt.

Anschließend wird der überschüssige Alkohol abrotiert und das zurückbleibende Polymer in Dioxan gelöst. Das Polymer wird in getrocknetem n-Heptan gefällt und im Vakuum getrocknet.

Aus den 5 Ansätzen (A-E) werden so insgesamt 15 verschiedene Polymere hergestellt, die einen Fluoreszeinaminanteil von 2 Größenordnungen abdecken und jeweils 3 verschiedene veresterte Alkohole enthalten.

## Patentansprüche

1. Meßeinrichtung zur Bestimmung der Konzentration von anorganischen und organischen Verbindungen in einer Probe, mit einem mit der Probe in Kontakt zu bringenden Sensorelement, welches einen fluoreszenzoptischen Indikator enthält, der nach Anregung über eine Anregungslichtquelle in Abhängigkeit von der vorliegenden Konzentration der zu detektieren den anorganischen oder organischen Verbindung fluoresziert, und mit einer Anordnung zur Messung und Auswertung der eingestrahlten Strahlung und des reemittierten Fluoreszenzlichtes, dadurch gekennzeichnet, daß das mit der Probe in Kontakt zu bringende Sensorelement aus einer Polymermatrix besteht, die aus
(a) einer Matrixkomponente, welche sich von einer oder mehrerer Einheiten der Formel I ableitet 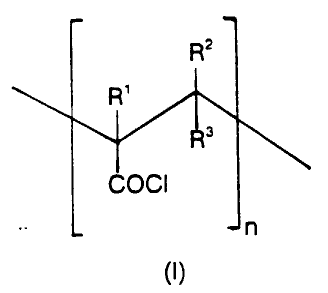 wobei
R¹- Wasserstoff, Deuterium oder Methyl bedeutet und
R²- und R³- unabhängig voneinander für Wasserstoff, Deuterium oder Methyl stehen
und der Polymerisationsgrad n eine ganze Zahl im Bereich von 80 bis 2500 ist
und
(b) einer Farbstoffkomponente, die kovalent an den Säurechloridgruppen der Matrixkomponente immobilisiert ist
und
(c) einer oder mehrerer Ouellkomponenten, die kovalent an den verbleibenden freien Säurechloridgruppen der Matrixkomponente gebunden sind,
herstellbar ist.

2. Meßeinrichtung nach Anspruch 1, dadurch gekennzeichnet, daß die Farbstoffkomponente der Polymermatrix aus der Gruppe der Fluoresceinfarbstoffe stammt.

3. Meßeinrichtung nach Anspruch 1, dadurch gekennzeichnet, daß die Farbstoffkomponente im Bereich von 0,01 bis 1 mol-%, bezogen auf die Matrixkomponente (a) eingesetzt wird.

4. Meßeinrichtung nach Anspruch 1, dadurch gekennzeichnet, daß als Quellkomponente Methanol, Ethanol, Propanol und/oder Butanol verwendet werden.

5. Meßeinrichtung nach Anspruch 1, dadurch gekennzeichnet, daß die Quellkomponente im 2- bis 6-fachen Überschuß, bezogen auf die Matrixkomponente (a), eingesetzt wird.

6. Meßeinrichtung nach Anspruch 1, dadurch gekennzeichnet, daß die Zeitkonstanten für die Ansprechzeit des Sensorelements im Bereich von 1 Sekunde bis 20 Minuten liegen.

7. Meßeinrichtung nach Anspruch 1, dadurch gekennzeichnet, daß die Lichtzufuhr von der Lichtquelle zu dem Sensorelement sowie die Lichtableitung von dem Sensorelement zu den Detektoren mit Hilfe von Lichtwellenleiten erfolgt.

8. Meßeinrichtung nach Anspruch 1, dadurch gekennzeichnet, daß dem Sensorelement semipermeable Membranen vorgeschaltet sind.

9. Meßeinrichtung nach Anspruch 1, dadurch gekennzeichnet, daß die Empfindlichkeit des Sensorelements bei bis zu 0,5 ng/ml liegt.

10. Meßeinrichtung nach Anspruch 1, dadurch gekennzeichnet, daß sie zur pH-Wert-Bestimmung eingesetzt wird.

## Claims

1. A measuring system for the determination of the concentration of inorganic and organic compounds in a sample, having a sensor element to be brought into contact with the sample, which sensor element contains an optical fluorescent indicator which, upon excitation via an excitation light source, fluoresces as a function of the present concentration of the inorganic or organic compound to be detected, said measuring system being configured for measuring and evaluating the incoming radiation and the reemitted fluorescent light, wherein the sensor element to be brought into contact with the sample is composed of a polymer matrix which can be prepared from
(a) a matrix component derived from one or more units of the formula I 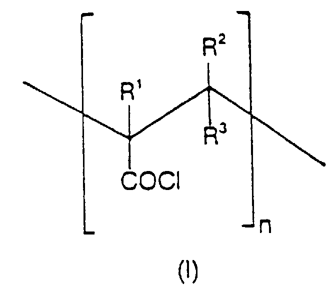 in which
R¹- is hydrogen, deuterium or methyl and
R²- and R³-, independently of one another, are hydrogen, deuterium or methyl,
and the degree of polymerization n is an integer in the range from 80 to 2500,
and
(b) a dye component which is immobilized covalently on the acyl chloride groups of the matrix component,
and
(c) one or more swelling components which are bound covalently at the remaining free acyl chloride groups of the matrix component.

2. The measuring system as claimed in claim 1, wherein the dye component of the polymer matrix is a member of the group of fluorescein dyes.

3. The measuring system as claimed in claim 1, wherein the dye component is used in the range from 0.01 to 1 mol %, based on the matrix component (a).

4. The measuring system as claimed in claim 1, wherein the swelling component used is methanol, ethanol, propanol and/or butanol.

5. The measuring system as claimed in claim 1, wherein the swelling component is used in 2- to 6-fold excess, based on the matrix component (a).

6. The measuring system as claimed in claim 1, wherein the time constants for the response time of the sensor element are in the range from 1 second to 20 minutes.

7. The measuring system as claimed in claim 1, wherein the light is conducted from the light source to the sensor element, and away from the sensor element to the detectors, with the help of optical waveguides.

8. The measuring system as claimed in claim 1, wherein semipermeable membranes are placed in front of the sensor element.

9. The measuring system as claimed in claim 1, wherein the sensitivity of the sensor element is as low as 0.5 ng/ml.

10. The measuring system as claimed in claim 1, wherein the system is used for pH determination.

## Revendications

1. Dispositif de mesures pour déterminer des concentrations en composés organiques et inorganiques dans un échantillon, avec un élément capteur à mettre en contact avec l'échantillon, qui contient un indicateur optique fluorescent, qui après excitation à l'aide d'une source de lumière excitante, émet une fluorescence en fonction de la concentration présente du composé organique ou inorganique à détecter et on mesure à l'aide d'un dispositif de mesures et d'évaluation de rayonnement émis et réémis de la lumière fluorescente, caractérisé en ce que l'élément capteur à mettre en contact avec l'échantillon se compose d'une matrice polymère que l'on prépare à partir
a) d'un constituant de matrice dérivant d'un ou plusieurs motifs de formule I 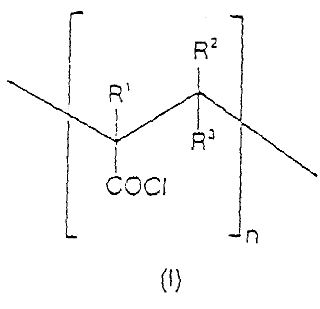 où
R¹ représente l'hydrogène, le deutérium ou méthyle ;
R² et R³, indépendamment l'un de l'autre, représentent l'hydrogène, le deutérium ou méthyle et le degré de polymérisation
n un nombre entier dans l'intervalle de 80 à 2500,
b) d'un constituant colorant immobilisé de façon covalente sur des groupes de chlorure d'acide du constituant de matrice et
c) d'un ou de plusieurs constituants gonflables qui sont liés par une liaison covalente aux groupes de chlorure d'acide libres résiduels du constituant de matrice.

2. Dispositif de mesures selon la revendication 1, caractérisé en ce que le constituant colorant de la matrice polymère appartient au groupe des colorants de la fluorescéine.

3. Dispositif de mesures selon la revendication 1, caractérisé en ce que le constituant colorant est utilisé dans une quantité de 0,01 à 1% en mole par rapport au constituant de matrice (a).

4. Dispositif de mesures selon la revendication 1, caractérisé en ce qu'on utilise en tant que constituant gonflant le méthanol, l'éthanol, le propanol et/ou le butanol.

5. Dispositif de mesures selon la revendication 1, caractérisé en ce que le constituant gonflant est utilisé en excès 2 à 6 fois, par rapport au constituant de matrice.

6. Dispositif de mesures selon la revendication 1, caractérisé en ce que les constantes de temps pour le temps de réponse de l'élément capteur se trouvent dans l'intervalle de 1 seconde à 20 minutes.

7. Dispositif de mesures selon la revendication 1, caractérisé en ce que l'alimentation en lumière de la source de lumière vers l'élément capteur, ainsi que la déviation de la lumière de l'élément capteur vers les déflecteurs, est effectué à l'aide de conducteurs d'ondes lumineuses.

8. Dispositif de mesures selon la revendication 1, caractérisé en ce qu'on installe des membranes semi-perméables devant l'élément capteur.

9. Dispositif de mesures selon la revendication 1, caractérisé en ce que la sensibilité de l'élément capteur va jusqu'à 0,5 ng/ml.

10. Dispositif de mesures selon la revendication 1, caractérisé en ce qu'on l'utilise pour la détermination de la valeur du pH.
